# EUROPEAN PATENT APPLICATION

(11) **EP 3 447 872 A1**
(43) Date of publication of application: **27.02.2019**
(21) Application number: 18179699.6
(22) Date of filing: 26.06.2018
(51) Int. Cl.: H02J 3/32, H02J 3/36, H02J 7/34

(54) **POWER FLUCTUATION MITIGATION SYSTEM**

(30) Priority: 21.08.2017 JP 2017158329
(71) Applicant: Fuji Electric Co., Ltd., Kawasaki-shi, Kanagawa 210-9530 (JP); RIKEN, Wako-shi, Saitama 351-0198 (JP)
(72) Inventor: Yutani, Kouji, Kawasaki-shi, Kanagawa 210-9530 (JP); Tsukamoto, Toshiyuki, Wako-shi, Saitama (JP)
(74) Representative: Appelt, Christian W.

(57) **Abstract**

A power fluctuation mitigation system includes a first converter coupled to an AC power supply to perform AC-to-DC conversion, an inverter coupled to the first converter via a DC intermediate condenser to perform DC-to-AC conversion to supply power to an AC load, a second converter coupled to the AC power supply to perform AC-to-DC conversion, an electric storage device configured to be charged by a DC output power of the second converter, and a DC/DC converter coupled between the DC intermediate condenser and the electric storage device to perform DC power conversion, wherein a DC power obtained by activating the DC/DC converter is supplied to the DC intermediate condenser as a compensating power upon a change in an output of the inverter occurring due to fluctuation of the AC load.

## Description

### BACKGROUND OF THE INVENTION

### 1. Field of the Invention

The disclosures herein relate to a power fluctuation mitigation system for mitigating power fluctuation caused by a sudden change or the like in the load coupled to an AC power grid.

### 2. Description of the Related Art

A grid stabilization system disclosed in Patent Document 1 is known in the art as a conventional technology for stabilizing and mitigating power fluctuation in an AC power grid.

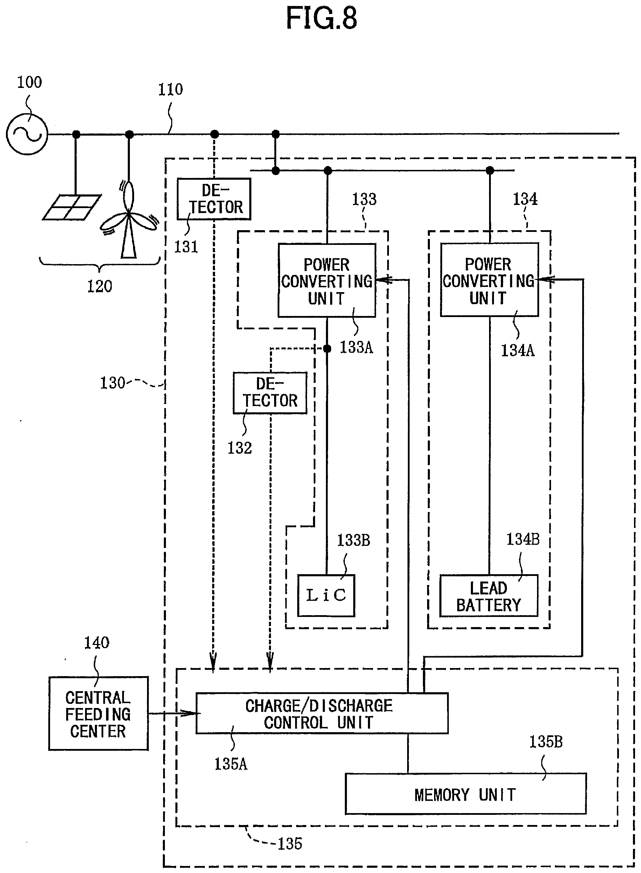

Fig. 8 is a drawing illustrating an entire configuration of such a grid stabilization system, which includes an AC power supply (grid power supply) 100, a power grid 110, a power generating facility 120 utilizing renewable energy such as a solar power generation device or a wind power generation device, a power grid stabilization system 130, a frequency detector 131, a power detector 132, a capacitor device 133 including a power converting unit 133A and a lithium ion capacitor (LiC) 133B, an electric storage device 134 including a power converting unit 134A and a lead battery 134B, a control device 135 including a charge/discharge control unit 135A and a memory unit 135B, and a central feeding center 140.

The related-art technology illustrated in Fig. 8 has an objective to mitigate power fluctuation on the power grid 110 occurring due to changes in the power level generated by the power generating facility 120. A particular objective is to reduce the number of charging and discharging cycles of the lead battery 134B by giving priority to the charging and discharging of the lithium ion capacitor 133B so as to prevent the degradation of the lead battery 134B.

A specific operation for mitigating power fluctuation is based on the knowledge that power fluctuation is accompanied with frequency fluctuation. When a detection value indicative of grid frequency produced by the frequency detector 131 exhibits fluctuation, the charge/discharge control unit 135A first uses the power converting unit 133A to give priority to the charging and discharging of the lithium ion capacitor 133B. Power supplied to (absorbed by) the power grid 110 is thereby controlled to suppress power fluctuation. When the charging and discharging of the lithium ion capacitor 133B alone fails to provide a sufficient suppression effect, the charge/discharge control unit 135A utilizes the power converting unit 134A to control the charging and discharging of the lead battery 134B, which complements the suppression of power fluctuation.

This arrangement prevents the degradation of the lead battery 134B, for which the number of times charging and discharging can be performed is significantly lower than for the lithium ion capacitor 133B. Prolonging the life of the system is thus achieved.

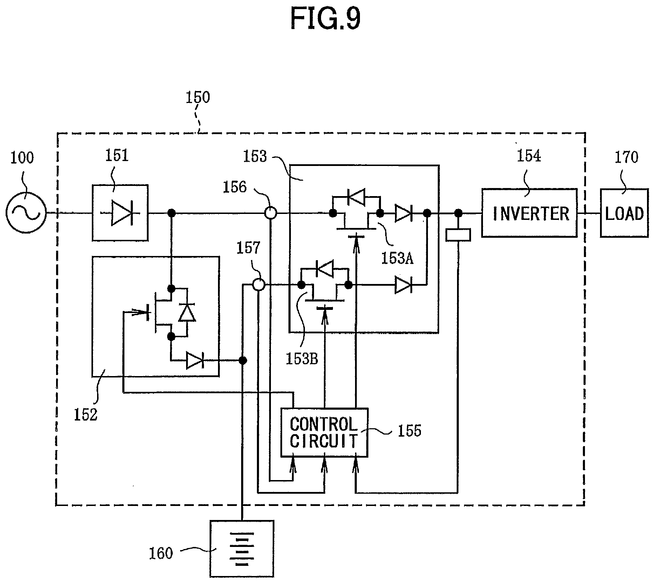

Fig. 9 is a drawing illustrating the entire configuration of a power supply system of an AC input leveling type as disclosed in Patent Document 2. Fig. 9 shows an input-leveling-type power supply device 150, a converter 151, a charging circuit 152, a synthesizing circuit 153, switching elements 153A and 153B, an inverter 154, a control circuit 155, current measuring devices 156 and 157, a secondary battery 160, and a load 170.

This power supply system of an AC input leveling type properly controls the ratio of synthesis of the DC power produced by the AC power supply 100 to the DC power produced by the secondary battery 160 by driving the switching elements 153A and 153B of the synthesizing circuit 153. Power fluctuation is thereby reduced in the facility having a secondary battery with a minimum capacity even when the load 170 fluctuates depending on the hour. This enables a stable operation of the load 170 and the reduction of peak current.

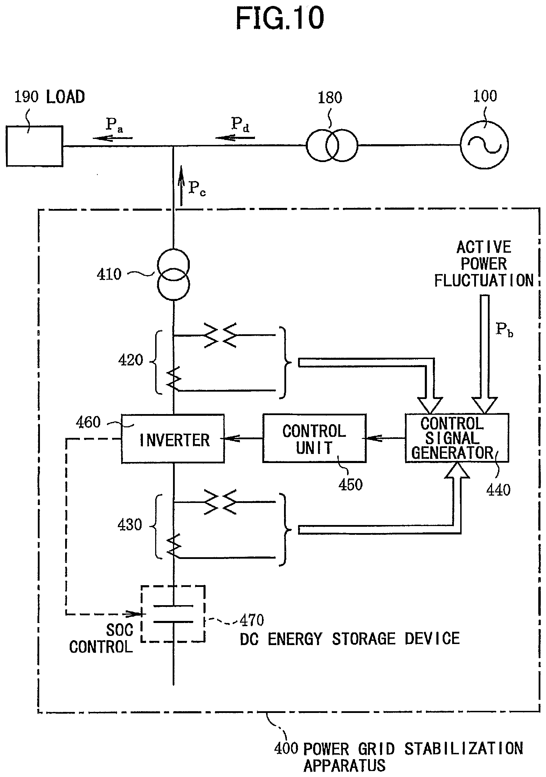

Fig. 10 is a drawing illustrating an entire configuration of a power grid stabilization apparatus disclosed in Patent Document 3.

Fig. 10 shows an interconnecting transformer 180, a load (or power generator) 190, a power grid stabilization apparatus 400, an interconnecting transformer 410, current/voltage detectors 420 and 430, a control signal generator 440, a control unit 450, an inverter 460, and a DC energy storage device 470.

In the power grid stabilization apparatus 400, a fluctuation P_{b} of an active power Pₐ caused by a sudden change or the like in the load is detected and supplied to the control signal generator 440. In the control signal generator 440, further, the output capacitance of the inverter 460 is calculated from the detection values of the current/voltage detector 420, and the SOC (i.e., state of charge or charge rate) of the DC energy storage device 470 is measured from the detection values of the current/voltage detector 430.

The control signal generator 440 derives the offset to compensate for power loss at the inverter 460 obtained from the above-noted output capacitance and also to minimize the fluctuation of the SOC of the DC energy storage device 470. The offset is then added to the fluctuation P_{b} to generate a control signal for the inverter 460. This control signal is used to drive the inverter 460, thereby adjusting the SOC of the DC energy storage device 470 to an optimum value, and also performing stabilization control which keeps the active power P_{d} at a constant level by injecting a compensating power P_{c} to the power grid.

In the related-art technologies illustrated in Fig. 8 and Fig. 9, reducing the frequency of charge and discharge of a secondary battery and its share of load power to a minimum enables the reduction of speed, to some extent, at which the secondary battery degrades.

Regularly performed maintenance and inspection work, however, is indispensable as long as a secondary battery is used. Instruments, personnel, labor, time, etc., required for this work impose a heavy burden.

In contrast, the related-art technology disclosed in Fig. 10 adjusts the SOC of the DC energy storage device 470 to an optimum value all the time, which is expected to reduce the load of maintenance and inspection work, compared with the cases illustrated in Fig. 8 and Fig. 9.

In the case of the load 190 being a large-scale computer system in which various computational jobs are concurrently performed, sudden and complex load fluctuations may occur on a frequent basis. In such a case, it takes a long time for the power grid stabilization apparatus 400 illustrated in Fig. 10 to measure the SOC and the power loss and to compute an offset, resulting in a delay in control responses. Difficulties in promptly reducing and mitigating the power fluctuation of a power grid thus become a problem.

Accordingly, it may be desirable to provide a power fluctuation mitigation system that can suppress power fluctuation, without delay, exceeding the rated power of a power grid caused by a sudden change or the like in the AC load.

### [Related-Art Documents]

### [Patent Document]

[Patent Document 1] Japanese Patent No. 5816288 (paragraphs [0018] to [0019], Figure 1, Figure 2, etc.)
[Patent Document 2] Japanese Patent No. 4932653 (paragraphs [0020] to [0021], Figure 1, Figure 2, etc.)
[Patent Document 3] Japanese Patent Application Publication No. 2001-157364 (paragraphs [0022] to [0023], Figure 3, Figure 4, etc.)

### SUMMARY OF THE INVENTION

According to an embodiment, a power fluctuation mitigation system includes a first converter coupled to an AC power supply to perform AC-to-DC conversion, an inverter coupled to the first converter via a DC intermediate condenser to perform DC-to-AC conversion to supply power to an AC load, a second converter coupled to the AC power supply to perform AC-to-DC conversion, an electric storage device configured to be charged by a DC output power of the second converter, and a DC/DC converter coupled between the DC intermediate condenser and the electric storage device to perform DC power conversion, wherein a DC power obtained by activating the DC/DC converter is supplied to the DC intermediate condenser as a compensating power upon a change in an output of the inverter occurring due to fluctuation of the AC load.

According to at least one embodiment, the power fluctuation mitigation apparatus including the electric storage device and the DC/DC converter immediately supplies DC power to the DC intermediate circuit of the AC feed, thereby reducing and mitigating the power fluctuation of a power grid, without the risk of the power fluctuation of the output side affecting the input side.

Further, the use of a capacitive storage device as the electric storage device serves to reduce the manual labor required for maintenance and inspection.

### BRIEF DESCRIPTION OF THE DRAWINGS

Fig. 1 is a drawing illustrating the configuration of a power fluctuation mitigation system according to an embodiment;
Fig. 2 is a drawing schematically illustrating power conditions observed at a DC intermediate circuit, an input side, and an output side of an AC feed for both the case of a stationary condition and the case of sudden load changes when no power fluctuation mitigation apparatus is provided;
Fig. 3 is a drawing obtained by rewriting and aligning time axes of the power conditions of respective points illustrated in Fig. 2;
Fig. 4 is a waveform diagram illustrating the results of measuring an output current, an input current, and an input voltage when a sudden load change is simulated by use of a test apparatus including an AC feed and a dummy load;
Fig. 5 is a drawing schematically illustrating a compensating power by a power fluctuation mitigation apparatus and power conditions observed at the DC intermediate circuit, input side, and output side of the AC feed for both the case of a stationary condition and the case of sudden load changes in the embodiment;
Fig. 6 is a drawing obtained by rewriting and aligning time axes of the power conditions of respective points illustrated in Fig. 5;
Fig. 7 is a waveform chart schematically illustrating the powers of respective points observed at the time of a sudden change in an AC load according to the embodiment;
Fig. 8 is a drawing illustrating the entire configuration of a related-art technology disclosed in Patent Document 1;
Fig. 9 is a drawing illustrating the entire configuration of a related-art technology disclosed in Patent Document 2; and
Fig. 10 is a drawing illustrating the entire configuration of a related-art technology disclosed in Patent Document 3.

### DESCRIPTION OF THE PREFERRED EMBODIMENTS

In the following, embodiments of the present invention will be described with reference to the accompanying drawings.

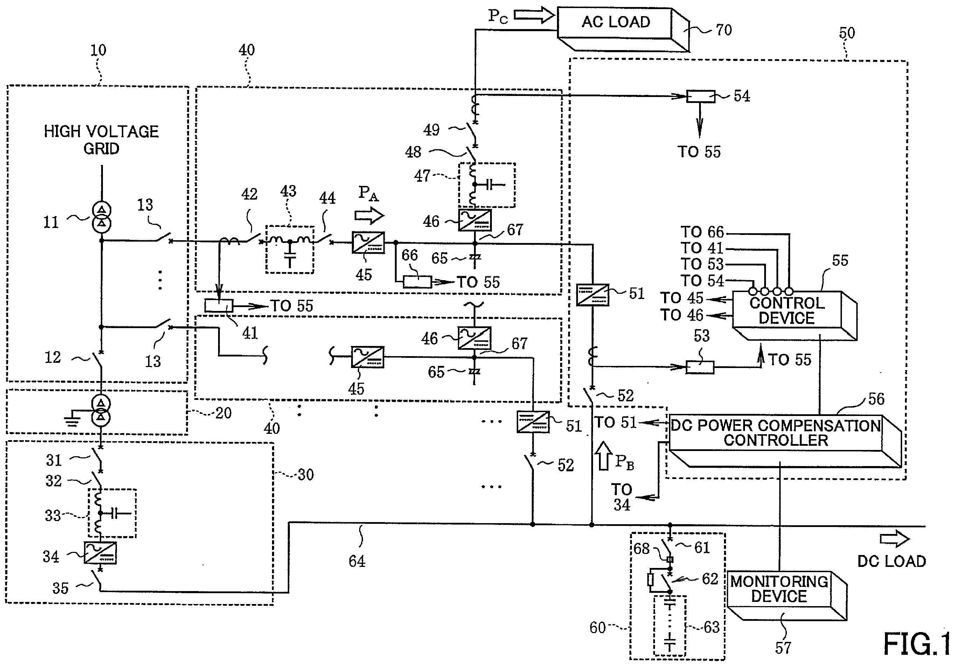

Fig. 1 is a drawing illustrating the configuration of a power fluctuation mitigation system according to an embodiment. An AC power supply 10 includes a power supply transformer 11 for stepping down the voltage of a power grid, a breaker 12 coupled between the secondary side of the power supply transformer 11 and the primary side of an isolation transformer 20, and a plurality of breakers 13 coupled between the secondary side of the power supply transformer 11 and a plurality of AC feeds 40, respectively, which will be described later.

The AC feeds 40 all have the same configuration, and supply AC power to corresponding AC loads 70, respectively. An example of the AC loads 70 is a computer system in which a sudden and complex change in the load occurs on a frequent basis.

Each of the AC feeds 40 includes a breaker 42, an LC filter 43, an electromagnetic contactor 44, a converter 45, a DC intermediate condenser 65, an inverter 46, an LC filter 47, an electromagnetic contactor 48, and a breaker 49, which are coupled in the order listed between the output side of the breaker 13 and the AC load 70.

In the following, a circuit portion including the DC intermediate condenser 65 and coupled to the output side of the converter 45 and to the input side of the inverter 46 is referred to as a DC intermediate circuit 67.

A voltage current meter 41 is provided at the input side of the breaker 42. A voltage meter 66 is provided at the output side of the converter 45 to measure the voltage of the DC intermediate condenser 65. A voltage current meter 54 is provided at the output side of the breaker 49. Measured values obtained by the voltage current meter 41, the voltage meter 66, and the voltage current meter 54 are supplied to a control device 55.

Based on these measured values, the control device 55 supplies pulse-width-modulated control signals to the converter 45 and to the inverter 46. In response, the converter 45 operates such that the voltage of the DC intermediate condenser 65 (i.e., the voltage of the DC intermediate circuit 67) becomes a rated value. Further, the inverter 46 operates such that the voltage applied to the AC load 70 becomes a rated value.

The method of controlling a converter and an inverter in the AC feed 40 is not limited to the pulse-width-modulation control as described above.

Further, the contact point between the converter 45, the DC intermediate condenser 65, and the inverter 46 in each AC feed 40 is coupled to a DC transmission line 64 through a two-way DC/DC converter 51 and a DC breaker 52. The DC/DC converter 51 may be implemented as an isolation-type two-way DC/DC converter having the input and the output thereof isolated from each other by a transformer, or may be implemented as a two-way step-up/down chopper.

The DC transmission line 64 is coupled to an electric storage block 60. The electric storage block 60 includes a breaker 61, a resistor 68, an initial charge circuit 62 (i.e., a switch and a current limiting resistor connected in parallel), and an electric storage device 63, which are connected in series. The electric storage device 63 may preferably be implemented as a large number of series-connected capacitive storage devices such as lithium ion capacitors (LiC), electric double layer capacitors, or large-volume electrolytic condensers. Alternatively, a chargeable chemical battery (i.e., secondary battery) such as a lead battery may be used. The electric storage device 63 is charged at a voltage lower than the voltage of the DC intermediate circuits 67 of the AC feeds 40 by a converter 34 of an AC/DC converter 30, which will be described later.

A voltage current meter 53 is provided between the DC/DC converter 51 and the DC breaker 52. A measured value obtained by the voltage current meter 53 is supplied to the control device 55. The control device 55 uses proper transfer means to transfer the measured values from the voltage current meter 41, the voltage meter 66, the voltage current meter 54, and the voltage current meter 53 to a DC power compensation controller 56 and then to a monitoring device 57.

The DC power compensation controller 56 uses these measured values to generate control signals for controlling the DC/DC converter 51. In response to the control signals generated by the DC power compensation controller 56, the DC/DC converter 51 supplies power stored in the electric storage device 63 to the DC intermediate circuit 67 of the AC feed 40. The DC/DC converter 51, the DC breaker 52, the voltage current meters 53 and 54, the control device 55, the DC power compensation controller 56, and the like are mounted on the same distribution panel 50.

The secondary side of the isolation transformer 20 is coupled to the AC/DC converter 30.

The AC/DC converter 30 includes a breaker 31, an electromagnetic contact 32, an LC filter 33, a converter 34, and an air circuit breaker 35, which are coupled in the order listed between the secondary side of the isolation transformer 20 and the DC transmission line 64. The converter 34 converts the AC power of the power grid into a DC power for provision to the DC transmission line 64. The power supplied from the converter 34 to the DC transmission line 64 is used to charge the electric storage device 63 of the electric storage block 60, and is also supplied to a DC load coupled to the DC transmission line 64.

The converter 34 is also capable of converting the DC power of the DC transmission line 64 into AC power for provision to the power grid side. The AC/DC converter 30 thus serves as a power conditioner system (PCS).

The control signals for controlling the converter 34 are generated by the DC power compensation controller 56. The DC power compensation controller 56 is also capable of causing the DC/DC converter 51 to charge the electric storage device 63 with the power of the DC intermediate circuit 67 of the AC feed 40 when the AC/DC converter 30 suffers malfunction.

In the configuration noted above, the DC/DC converter 51 and the electric storage device 63 of the electric storage block 60 constitute the main part of the power fluctuation mitigation apparatus.

In the following, the operation of the embodiment will be described.

A description will first be given of the case in which the DC/DC converter 51 and the electric storage block 60 are not coupled to the contact point between the converter 45, the DC intermediate condenser 65, and the inverter 46.

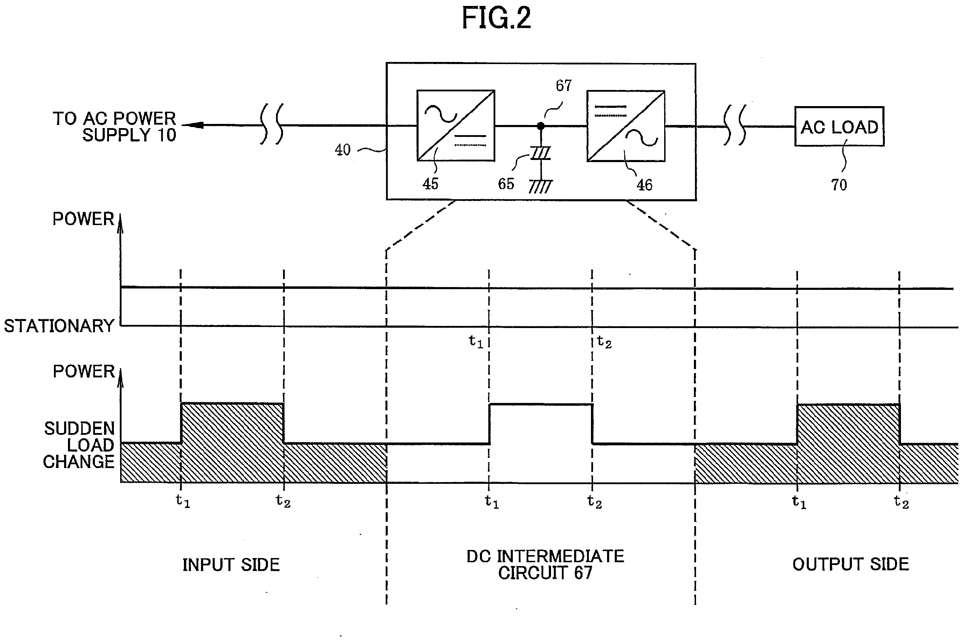

Fig. 2 is a drawing schematically illustrating the state of power at the DC intermediate circuit 67, the input side, and the output side of the AC feed 40 with respect to both a stationary state in which there is no fluctuation in the size of the AC load 70 and the time of a sudden load change at which the size of the AC load 70 exhibits a sudden change.

In the stationary state of the AC load 70 illustrated in Fig. 2, the AC feed 40 supplies power obtained by converting the power of the AC power supply 10 to the AC load 70. In this case, the respective powers of the DC intermediate circuit 67, the input side, and the output side of the AC feed 40 are substantially equal to each other when the internal loss of the AC feed 40 is disregarded. The voltage of the DC intermediate condenser 65 is kept at the rated value through the operation of the converter 45. The input voltage of the AC load 70 is kept at the rated value through the operation of the inverter 46.

In the following, a description will be given of the case in which the AC load 70 exhibits a sudden change during the period t₁ through t₂ illustrated in Fig. 2, resulting in an increase of power at the output side of the AC feed 40. If the power of the AC load 70 is within the rated power of the converter 45, the converter 45 operates in such a manner as to maintain the voltage of the DC intermediate condenser 65 at the rated value. Through this operation, the converter 45 supplies power to the AC load 70 through the DC intermediate circuit 67. As a result, the power fluctuation of the AC load 70 occurring during the period t₁ through t₂ causes a power fluctuation having substantially the same shape to appear simultaneously at the power-grid side (i.e., at the input side of the AC feed 40).

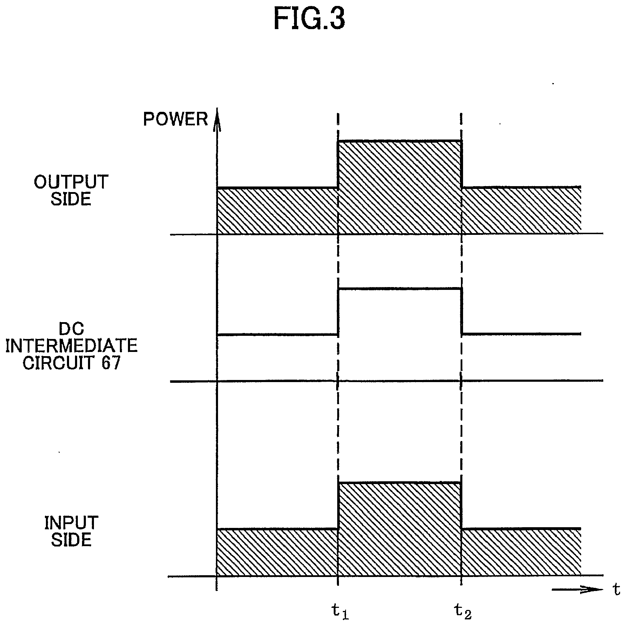

The time charts illustrated in Fig. 2 may be aligned in the time dimension to provide a chart illustrated in Fig. 3.

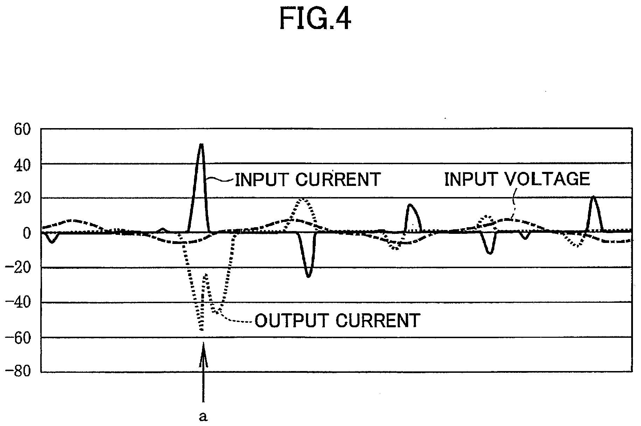

Fig. 4 is a waveform chart illustrating the results of measuring the output current, input current, and input voltage of the AC feed 40 when a test apparatus comprised of the AC feed 40 and a dummy load is used and a sudden change is made to the output current in order to simulate a sudden load change. As is clearly shown in Fig. 4, the input current changes almost simultaneously with a sudden change in the output current (i.e., the point "a" of the waveform), which means that large power fluctuation occurs on the power grid side at the time of a sudden load change.

In the following, the operation of the embodiment will be described.

In this embodiment, the AC/DC converter 30 illustrated in Fig. 1 is put into operation to produce a DC output, which is used to charge the electric storage device 63 of the electric storage block 60 to an initial voltage value lower than the rated voltage value of the DC intermediate circuit 67. The DC breaker 52 is then turned on (with the breaker 61 of the electric storage block 60 and the switch of the initial charge circuit 62 being also turned on), which results in the electric storage device 63 being coupled to the DC/DC converter 51. Namely, the DC breaker 52 is turned on to couple the electric storage device 63 to the DC/DC converter 51, so that the DC intermediate circuit 67 of the AC feed 40 is coupled to the power fluctuation mitigation apparatus (i.e., the electric storage device 63 and the DC/DC converter 51).

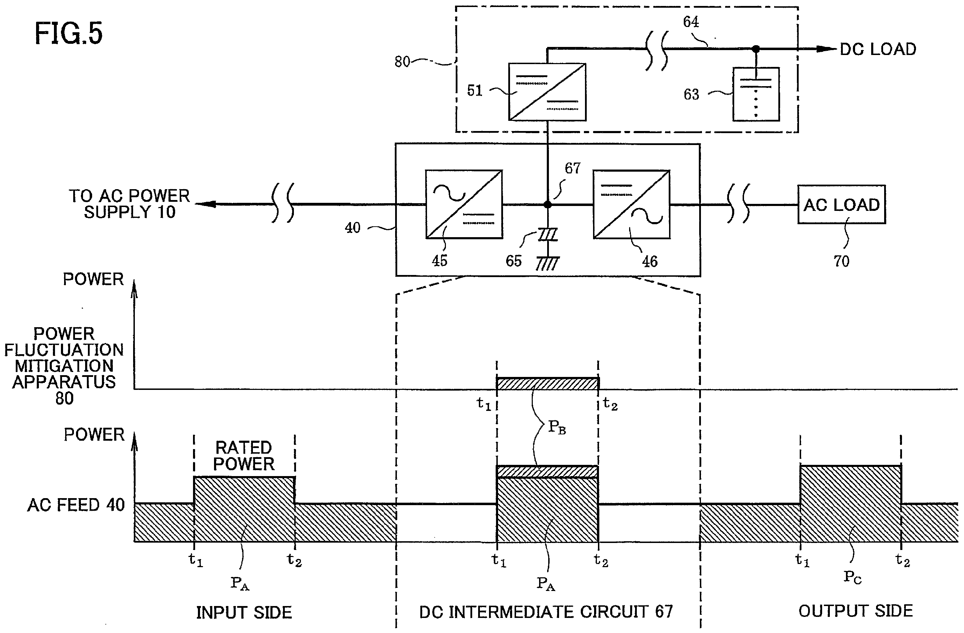

Fig. 5 is a drawing schematically illustrating power conditions observed at the DC intermediate circuit 67, the input side, and the output side of the AC feed 40 with respect to the AC feed 40 and a power fluctuation mitigation apparatus 80 of the present embodiment, and corresponds to previously described Fig. 2. In Fig. 5, the power fluctuation mitigation apparatus comprised of the DC/DC converter 51 and the electric storage device 63 is designated by a reference numeral 80.

When the AC load 70 is in the stationary state, the respective powers of the DC intermediate circuit 67, the input side, and the output side of the AC feed 40 are substantially equal to each other when the internal loss of the AC feed 40 is disregarded, as in the case of Fig. 2.

Attention is now turned to the case in which the AC load 70 exhibits a sudden change (i.e., sudden increase) during the period t₁ through t₂ illustrated in Fig. 5 to cause the power at the output side of the AC feed 40 to increase, especially the case in which the power of the AC load 70 exceeds the rated power of the converter 45. In this case, the converter 45 supplies to the DC intermediate circuit 67 the rated power that is the maximum producible power. Power in excess of the rated power of the converter 45 is supplied from the power fluctuation mitigation apparatus 80 to the DC intermediate circuit 67. During this operation, the converter 45 and the DC/DC converter 51 operate such that the voltage of the DC intermediate circuit 67 becomes equal to the rated value. The power supplied from the power fluctuation mitigation apparatus 80 to the DC intermediate circuit 67 is a compensating power that serves to limit the maximum power input into the AC feed 40 to the rated power and to reduce excessive power fluctuation at the power grid.

The converter 45 and the inverter 46 operate based on control signals generated by the control device 55. The DC/DC converter 51 operate based on control signals generated by the DC power compensation controller 56.

In the present embodiment, the control device 55 generates the control signals for the converter 45 and the inverter 46 by using the measured values of the voltage current meter 41, the voltage current meter 54, and the voltage meter 66. In addition to the measured values noted above, the DC power compensation controller 56 uses the measured values of the voltage current meter 53 to generate the control signals for the DC/DC converter 51.

In the time chart illustrated in Fig. 5, P_{A} for the period t₁ through t₂ of the DC intermediate circuit 67 is the power supplied from the converter 45, and P_{B} is the power supplied from the DC/DC converter 51 of the power fluctuation mitigation apparatus 80, with P_{C} being the output power of the AC feed 40.

As was previously described, power in excess of the rated power is supplied from the DC intermediate circuit 67 when the output power of the AC feed 40 increases during the period t₁ through t₂. As a result, a power fluctuation exceeding the rated power does not appear at the input side of the AC feed 40, as indicated by the symbol P_{A}.

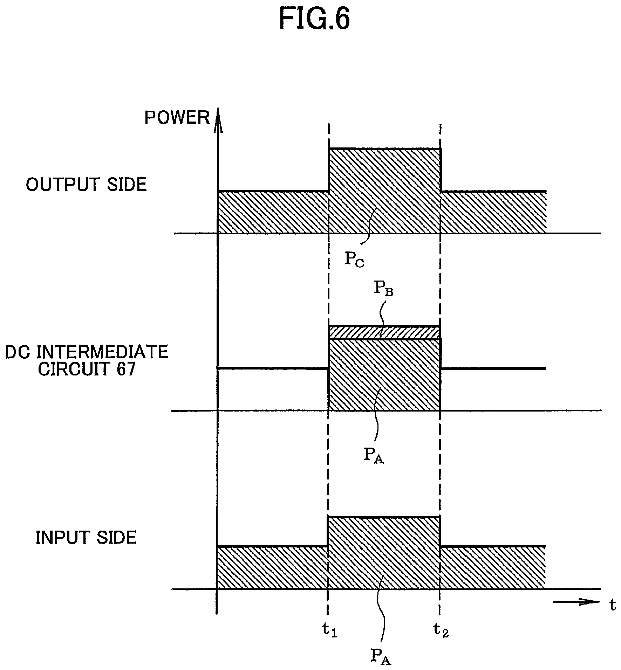

The time charts illustrated in Fig. 5 may be aligned in the time dimension to provide a chart illustrated in Fig. 6.

The electric storage device 63 is charged by the converter 34 after the DC/DC converter 51 stops operating. The charge current from the converter 34 has sufficiently smaller power than the rated power of the AC feed 40. Because of this, power required to charge the electric storage device 63 does not affect power fluctuation at the power grid.

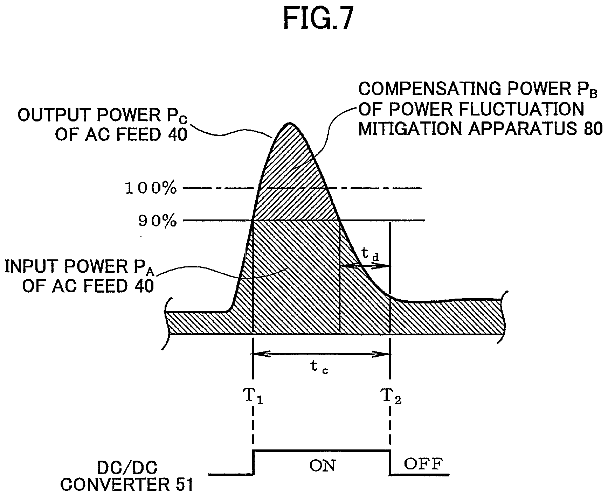

Fig. 7 is a waveform chart schematically illustrating the input power P_{A} into the AC feed 40, the compensating power P_{B} from the power fluctuation mitigation apparatus 80, and the output power P_{C} of the AC feed 40. These powers P_{A}, P_{B}, and P_{C} are designated by the same symbols in Fig. 5. It may be noted that the internal loss of the converter 45, the inverter 46, and the DC/DC converter 51 is ignored.

The powers P_{A}, P_{B}, and P_{C} are related as P_{A} + P_{B} = P_{C}. The output power P_{C} of the AC feed 40 corresponds to the envelope waveform illustrated in Fig. 7.

Control to make the input power P_{A} of the AC feed 40 not exceed the rated value (which will be referred to as 100%) is necessary at the time of supplying power to the AC load 70. It is preferable to limit the input power P_{A} to 90% of the rated value, for example, by taking into account a margin for error in case of a sudden change in the load.

In the present embodiment, as illustrated in Fig. 7, the DC/DC converter 51 of the power fluctuation mitigation apparatus 80 is activated at time T₁ at which the input power P_{A} exceeds 90% of the rated value. The DC/DC converter 51 is subsequently inactivated at time T₂ that is an off-delay time t_{d} after the occurrence of a drop below 90%. Namely, it suffices for the DC power compensation controller 56 to generate the control signals such as to drive the DC/DC converter 51 only for a duration t_{c}.

A slight time delay (e.g., a few milliseconds) from the time the input power P_{A} exceeds 90% of the rated value may be allowed before activating the DC/DC converter 51. In such a case, a minute dead band may be provided for the output voltage of the DC/DC converter 51 (i.e., the voltage of the DC intermediate condenser 65), and the activation of the DC/DC converter 51 may be delayed until the output voltage of the DC/DC converter 51 drops to the low end of the dead band.

The DC power compensation controller 56 can calculate the input power P_{A} based on the measured values from the voltage current meters 41 and 54. The time T₁, the time T₂, and the like may be determined based on these calculated values. The DC power compensation controller 56 may calculate P_{A}, P_{B}, and P_{C} based on the measured values from the voltage current meters 41, 53, and 54, followed by sending the calculated powers to the monitoring device 57. Based on these calculated powers, the monitoring device 57 can monitor the operation of the power fluctuation mitigation apparatus 80 to access the functioning of the power fluctuation mitigation apparatus 80.

When power fluctuation occurs simultaneously at the AC loads 70 with respect to two or more AC feeds 40, it is preferable to limit the input power of the AC feed 40 to lower than the rated power or to lower than 90% of the rated power. This arrangement serves to further reduce power fluctuation at the power grid.

Fig. 7 was used to describe the embodiment in which the DC/DC converter 51 is activated upon the AC load 70 exceeding 90% of the rated power of the converter 45 during the period T₁ through T₂. Notwithstanding this, the DC/DC converter 51 may also be activated when the AC load 70 requires lower power than the rated power of the converter 45. For example, the threshold value set at 90% of the rated power in Fig. 7 may be replaced with the power obtained by adding 10% of the rated power to the power in the stationary state, followed by using the replaced threshold for activating the DC/DC converter 51. This arrangement serves to reduce the power fluctuation of a power grid with respect to a power range lower than the rated power of the converter 45.

Further, the present invention is not limited to these embodiments, but various variations and modifications may be made without departing from the scope of the present invention.

## Claims

1. A power fluctuation mitigation system, comprising:
a first converter coupled to an AC power supply to perform AC-to-DC conversion;
an inverter coupled to the first converter via a DC intermediate condenser to perform DC-to-AC conversion to supply power to an AC load;
a second converter coupled to the AC power supply to perform AC-to-DC conversion;
an electric storage device configured to be charged by a DC output power of the second converter; and
a DC/DC converter coupled between the DC intermediate condenser and the electric storage device to perform DC power conversion,
wherein the power fluctuation mitigation system is configured such that a DC power obtained by activating the DC/DC converter is supplied to the DC intermediate condenser as a compensating power upon a change in an output of the inverter occurring due to fluctuation of the AC load.

2. The power fluctuation mitigation system as claimed in claim 1, further comprising a DC power compensation controller configured to control the DC/DC converter such that a sum of a DC output power of the first converter and the compensating power becomes equal to AC power required by the AC load.

3. The power fluctuation mitigation system as claimed in claim 1 or 2, wherein the power fluctuation mitigation system is configured such that a time to activate the DC/DC converter is determined based on an input power of the first converter or an output power of the inverter.

4. The power fluctuation mitigation system as claimed in any one of claims 1 to 3, wherein the DC/DC converter is configured to perform two-way DC power conversion and to charge the electric storage device with a DC output power of the DC/DC converter.

5. The power fluctuation mitigation system as claimed in any one of claims 1 to 4, wherein the first converter is configured to limit an output thereof to lower than a rated power upon simultaneous occurrences of power fluctuation at a plurality of the AC loads.

6. The power fluctuation mitigation system as claimed in any one of claims 1 to 5, wherein the electric storage device is a capacitor or electrolytic condenser.
